# EUROPÄISCHE PATENTANMELDUNG

(11) **EP 2 088 312 A1**
(43) Veröffentlichungstag der Anmeldung: **12.08.2009**
(21) Anmeldenummer: 07852342.0
(22) Anmeldetag: 14.12.2007
(51) Int. Cl.: F03B 13/12

(54) **WELLENKRAFTWERK**

(30) Priorität: 27.07.2007 UA 2007008685
(71) Anmelder: Ovsyankin, Vyacheslav Viktorovich, Ul. Voksalnaya 33-35 S.m.t Glevakha Vasilkovsky raion Kievskaya obl. 08631 (UA); Ovsyankin, Aleksey Vyacheslavovich, Ul. Vokzalnaya 33-35 S.m.t Glevakha Vasilkovsky raion Kievskaya obl., 08631 (UA); Kovalskyi, Aleksii Antonovich, Ul. Starokievskaya, 9-127 Kiev 01016 (UA)
(72) Erfinder: Ovsyankin, Vyacheslav Viktorovich, Ul. Voksalnaya 33-35 S.m.t Glevakha Vasilkovsky raion Kievskaya obl. 08631 (UA); Ovsyankin, Aleksey Vyacheslavovich, Ul. Vokzalnaya 33-35 S.m.t Glevakha Vasilkovsky raion Kievskaya obl., 08631 (UA); Kovalskyi, Aleksii Antonovich, Ul. Starokievskaya, 9-127 Kiev 01016 (UA)
(74) Vertreter: Jeck, Anton
(86) Internationale Anmeldenummer: PCT/UA2007/000076
(87) Internationale Veröffentlichungsnummer: WO 2009/023000

(57) **Zusammenfassung**

Die Erfindung betrifft ein Wellenkraftwerk mit einem energieaufnehmenden Element in Form eines beweglichen Längskörpers, wobei der Längskörper frei in den Nuten von mehreren Führungen angeordnet und die auf einer schwimmenden Rampe angeordnete gemeinsame Arbeitswelle mit einem Antrieb drehbar ist und wobei das axiale Drehmoment auf die Arbeitswelle nur in einer Richtung übertragbar ist und ermöglicht dem beweglichen Längskörper, die Form eines Spiralrotors mit den der Größe der auflaufenden Wellen des Wasserspiegels entsprechenden Kennwerten anzunehmen. Damit das Wellenkraftwerk eine erhöhte Haltbarkeit und Lebensdauer bei geringer Materialintensität und einem hohen stabilen Wirkungsgrad aufweist, ist nach der Erfindung vorgesehen, dass es mindestens zwei Arbeitswellen aufweist, welche eine ausreichende Schwimmkraft besitzen und gleichzeitig mit der Übertragung des axialen Drehmoments die Funktion einer gemeinsamen schwimmenden Rampe erfüllen und dass Querspante zum Zusammenfügen der Arbeitswellen und schirmförmige Dämpfer zur Stabilisierung der Lage des Wellenkraftwerks in stürmischem Meer vorgesehen sind.

## Beschreibung

Die Erfindung betrifft ein Wellenkraftwerk mit einem energieaufnehmenden Element in Form eines beweglichen Längskörpers, wobei der Längskörper frei in den Nuten von mehreren Führungen angeordnet und die auf einer schwimmenden Rampe angeordnete gemeinsame Arbeitswelle mit einem Antrieb drehbar ist und wobei das axiale Drehmoment auf die Arbeitswelle nur in einer Richtung übertragbar ist und ermöglicht dem beweglichen Längskörper, die Form eines Spiralrotors mit den der Größe der auflaufenden Wellen des Wasserspiegels entsprechenden Kennwerten anzunehmen.

Die Erfindung betrifft ein Wellenkraftwerk, das zur Umwandlung der Energie von Wellen des Wasserspiegels in elektrische Energie eingesetzt werden kann.

Es sind verschiedene Vorrichtungen zur Umwandlung der Meereswellenenergie in elektrische Energie bekannt, im Besonderen diejenigen, welche im Buch von David Ross "Wellenenergie" (Leningrad, Gidrometeoisdat, 1982) beschrieben sind.

Es wäre von praktischem Interesse, diese zur Gewinnung von einem beträchtlichen Betrag der elektrischen Energie einzusetzen. Die meisten davon weisen aber erhebliche Mängel auf:

Die Vorrichtung nach Cockerell-Floß (England) bedarf einer komplizierten Umwandlungseinrichtung.

Die Vorrichtung nach Salter-Ente (England) stellt eine massive Vorrichtung dar, welche schwierig herzustellen und zu betreiben ist und ebenfalls eine komplizierte Umwandlungseinrichtung bedarf.

Die Vorrichtung nach Masuda-Wassersäule (Japan) bedarf einer zusätzlichen komplizierten Einrichtung zur Stabilisierung in stürmischem Meer.

Bekannt ist eine Vorrichtung, die ein als ein schwimmender Rotor ausgeführtes Arbeitsorgan aufweist. Diese Vorrichtung hat die Form von einem spiralförmigen Schraubenkörper. Dieser ermöglicht es, die Wellenenergie durch Drehen des Arbeitsorgans direkt in mechanische Energie umzuwandeln (akademischer Sammelband der UdSSR, Nr. 72103).

Der Mangel dieser Vorrichtung besteht darin, dass sie einen niedrigen Wirkungsgrad hat. Der Wirkungsgrad hängt vom Sollmaß und von der Form des Spiralrotors ab. Das entspricht aber nur selten den tatsächlichen Wellenkennwerten im Meer. Außerdem ist eine solche Vorrichtung schwierig herzustellen.

Zu den gemeinsamen Nachteilen der angeführten Vorrichtungen zur Umwandlung der Meereswellenenergie in elektrische Energie gehören:
- ein niedriger Wirkungsgrad,
- eine hohe Materialintensität,
- ein komplizierter Herstellungsablauf,
- eine Funktionsfähigkeit ausschließlich innerhalb eines beschränkten Wellenbereichs,
- eine begrenzte Haltbarkeit und
- eine kurze Lebensdauer in stürmischem Meer.

Der Prototyp der angemeldeten Erfindung ist ein Wellenkraftwerk, d.h. eine Vorrichtung zur Umwandlung der Energie von Wellen des Wasserspiegels. Diese Vorrichtung umfasst ein Arbeitsorgan, das als ein energieaufnehmendes Element ausgebildet ist. Dieses ist in Form eines beweglichen Längskörpers ausgeführt und frei in den Nuten von mehreren Führungen angeordnet. Jede von diesen Führungen ist um die auf einer schwimmenden Rampe angeordneten gemeinsamen Welle drehbar. Dabei wird das axiale Drehmoment auf die Welle nur in einer Richtung übertragen. Es ermöglicht dem beweglichen Längskörper die Form eines Spiralrotors mit den der Größte der einwirkenden Wellen entsprechenden Kennwerten anzunehmen (W. W. Owsjankin. Patent der Ukraine Nr. 56481, veröffentl. Mitteilungsblatt Nr. 3, 2005).

Dieser Prototyp weist folgende Mängel auf:
- eine begrenzte Haltbarkeit der Konstruktion in stürmischem Meer,
- eine hohe Wahrscheinlichkeit der Zerstörung des beweglichen Längskörpers und der Konstruktionselemente bei unvermeidlich hohen relativen Spannungen und Verformungen, welche im beweglichen Längskörper entstehen, wenn er die Form eines Spiralrotors annimmt,
- eine Verminderung des Wirkungsgrads des Arbeitsorgans bei einer Durchbiegung des beweglichen Längskörpers unter der Einwirkung vom hydrodynamischen Druck auflaufender Wellen.

Es ist Aufgabe der Erfindung, die Haltbarkeit und die Lebensdauer des Wellenkraftwerks zu erhöhen, welches eine geringe Materialintensität und einen stabil hohen Wirkungsgrad aufweist.

Die gestellte Aufgabe wird durch die Merkmale des Anspruchs 1 gelöst.

Die Konstruktion des Wellenkraftwerks weist ein energieaufnehmendes Element auf. Das energieaufnehmende Element ist in Form eines beweglichen Längskörpers ausgeführt und frei in den Nuten von mehreren Führungen angeordnet. Jede von diesen Führungen ist um die auf einer schwimmenden Rampe angeordnete gemeinsame Welle drehbar. Dabei wird das axiale Drehmoment auf die Welle nur in einer Richtung übertragen. Es ermöglicht dem beweglichen Längskörper die Form eines Spiralrotors mit den der Größe der einwirkenden Wellen entsprechenden Kennwerten anzunehmen. Gemäß der Erfindung sind in dieser Konstruktion des Wellenkraftwerks mindestens zwei Arbeitswellen angeordnet. Die Arbeitswellen besitzen ausreichende Schwimmkraft und erfüllen gleichzeitig mit der Übertragung vom axialen Drehmoment die Funktion einer gemeinsamen schwimmenden Rampe. Das vorgeschlagene Wellenkraftwerk enthält auch Querspante zum Zusammenfügen von den Arbeitswellen und schirmförmige Dämpfer zur Stabilisierung der Lage des Wellenkraftwerks in stürmischem Meer.

Nach einer besonderen Ausgestaltung der Erfindung ist dabei vorgesehen, dass das energieaufnehmende Element des Wellenkraftwerks aus einzelnen flachen Teilen besteht. Diese überdecken einander und sind miteinander fächerförmig verbunden, so dass sie sich frei hinsichtlich einander und die Längsachse der Arbeitswelle entlang bewegen und der Querkraft-Wirkung des Drucks mit hohem Versteifungsgrad standhalten können.

Nach einer weiteren vorteilhaften Ausgestaltung ist vorgesehen, dass das Wellenkraftwerk mit einem Tauchsystem ausgerüstet ist. Das Tauchsystem ermöglicht das Eintauchen in die notwendige Tiefe, in den bei der Entwicklung des Wellenkraftwerks berücksichtigten Wirkungsbereich der Wellen.

Die Erfindung wird anhand eines in den Zeichnungen dargestellten Ausführungsbeispiels näher erläutert. Es zeigen:

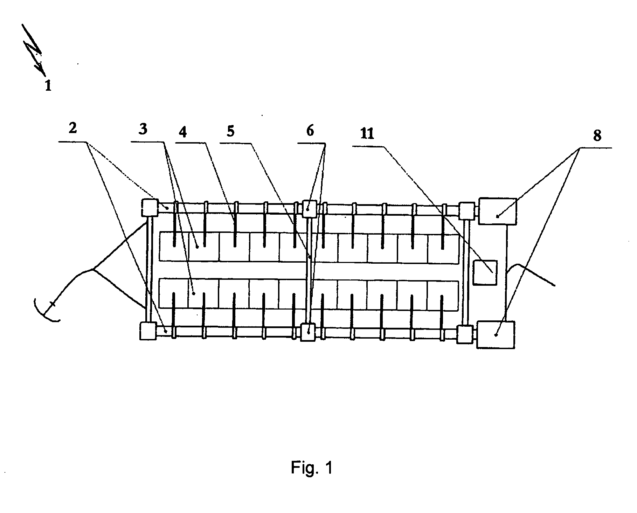

- Fig. 1: eine Draufsicht auf das Wellenkraftwerk und

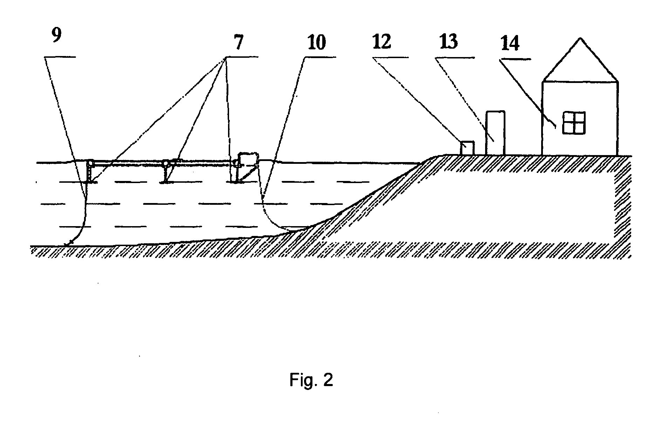

- Fig. 2: eine Anordnung des Wellenkraftwerks in einem Wasserbecken.

Das Wellenkraftwerk 1 besteht aus Arbeitswellen 2 mit einem Antrieb, energieaufnehmenden Elementen 3, Führungen 4, Querspanten 5, Lagerungen 6 und schirmförmigen Dämpfern 7 zur Stabilisierung der Lage des Wellenkraftwerks im stürmischen Meer. Außerdem weist es einen Generatorteil 8, ein Ankersystem 9, ein Kabelsystem 10, ein Tauchsystem 11, ein Umspannwerk 12, ein Steuer- und Stromspeichersystem 13 und einen Energieabnehmer 14 auf.

Das Wellenkraftwerk 1 wird im Meer im Tiefwasser angeordnet.

Das Wellenkraftwerk 1 funktioniert folgenderweise:

Die Meereswellen laufen auf das Wellenkraftwerk 1, nämlich auf die Arbeitswellen 2 mit dem Antrieb, auf. Der hydrodynamische Druck der Meereswellen wirkt mit den energieaufnehmenden Elementen 3 zusammen und erzeugt auf den Arbeitswellen 2 mit dem Antrieb ein axiales Drehmoment. Der Antrieb setzt es um und überträgt es auf den Generatorteil 8. Vom Generatorteil 8 wird die elektrische Energie über das Kabelsystem 10 zum Ufer auf das Umspannwerk 12, das Steuer- und Stromspeichersystem 13 und zum Energieabnehmer 14 übertragen. Die Lage des Wellenkraftwerks im Meer wird von einem Ankersystem 9 vorgegeben. Beim Auflaufen der Wellen wird die Lage durch die schirmförmigen Dämpfer 7 stabilisiert. Die durch die Querspante 5 zusammengefügten schwimmenden Arbeitswellen 2 mit dem Antrieb stellen eine hohe Haltbarkeit des Wellenkraftwerks sicher. Bei starkem Sturm wird das Wellenkraftwerk 1 vom Tauchsystem 11 in die notwendige Tiefe gefördert, und zwar in den bei der Entwicklung des Wellenkraftwerks vorgesehenen Wirkungsbereich der Wellen, wo es weiter funktionieren kann.

Im Vergleich zu den existierenden Wellenkraftwerken ermöglicht das vorgeschlagene Wellenkraftwerk, die Materialintensität um das Drei- bzw. Fünffache (also auf die 200 kg/kW) und die spezifische Kapitalintensität um das Zwei- bzw. Dreifache (also auf 1.500 - 2.000 Tsd. USD/kW) zu vermindern.

Es wird ein Nutzungsgrad der projektierten Leistung des Wellenkraftwerks von 0,8 erreicht, während bei den existierenden Wellenkraftwerken dieser Kennwert nur 0,3 bis 0,4 beträgt.

## Patentansprüche

1. Wellenkraftwerk mit einem energieaufnehmenden Element (3) in Form eines beweglichen Längskörpers, wobei der Längskörper frei in den Nuten von mehreren Führungen (4) angeordnet und die auf einer schwimmenden Rampe angeordnete gemeinsame Arbeitswelle (2) mit einem Antrieb drehbar ist und wobei das axiale Drehmoment auf die Arbeitswelle (2) nur in einer Richtung übertragbar ist und ermöglicht dem beweglichen Längskörper, die Form eines Spiralrotors mit den der Größe der auflaufenden Wellen des Wasserspiegels entsprechenden Kennwerten anzunehmen,
**dadurch gekennzeichnet,**
**dass** es mindestens zwei Arbeitswellen (2) aufweist, welche eine ausreichende Schwimmkraft besitzen und gleichzeitig mit der Übertragung des axialen Drehmoments die Funktion einer gemeinsamen schwimmenden Rampe erfüllen und
**dass** Querspante (5) zum Zusammenfügen der Arbeitswellen (2) und schirmförmige Dämpfer (7) zur Stabilisierung der Lage des Wellenkraftwerks in stürmischem Meer vorgesehen sind.

2. Wellenkraftwerk nach Anspruch 1,
**dadurch gekennzeichnet,**
**dass** das energieaufnehmende Element (3) des Wellenkraftwerks aus einzelnen flachen Teilen besteht, die sich überdecken und miteinander fächerförmig verbunden sind, so dass sie sich frei hinsichtlich einander und die Längsachse der Arbeitswelle (2) entlang bewegen und der Querkraft-Wirkung des Drucks mit hohem Versteifungsgrad standhalten können.

3. Wellenkraftwerk nach Ansprüchen 1 und 2,
**dadurch gekennzeichnet,**
**dass** es mit einem Tauchsystem (11) zum Eintauchen in die notwendige Tiefe und zwar in den bei der Entwicklung des Wellenkraftwerks vorgesehenen Wirkungsbereich der Arbeitswellen (2) ausgerüstet ist.
